# EUROPÄISCHE PATENTSCHRIFT

(11) **EP 2 906 825 B1**
(45) Veröffentlichungstag und Bekanntmachung des Hinweises auf die Patenterteilung: **06.07.2016**
(21) Anmeldenummer: 13776964.2
(22) Anmeldetag: 10.10.2013
(51) Int. Cl.: F03D 80/00

(54) **VERFAHREN ZUM EINSTELLEN EINES PITCH-WINKELS VON ROTORBLÄTTERN**
METHOD FOR SETTING A PITCH ANGLE OF ROTOR BLADES
PROCÉDÉ DE RÉGLAGE D'UN ANGLE DE CALAGE DE PALES DE ROTOR

(30) Priorität: 12.10.2012 DE 102012020054
(43) Veröffentlichungstag der Anmeldung: 19.08.2015
(73) Patentinhaber: Fraunhofer Gesellschaft zur Förderung der angewandten Forschung e.V., 80686 München (DE); Lutz, Otto, 97494 Bundorf (DE)
(72) Erfinder: LUTZ, Otto, 97494 Bundorf (DE); MEINLSCHMIDT, Peter, 38112 Braunschweig (DE); SCHLÜTER, Friedrich, 38118 Braunschweig (DE); GÜLKER, Gerd, 26127 Oldenburg (DE); TRAPHAN, Dominik, 26121 Oldenburg (DE); MILLER, Alexander, 48155 Münster (DE); FRÖHLER, Dominik, 80686 München (DE)
(74) Vertreter: Stornebel, Kai
(86) Internationale Anmeldenummer: PCT/EP2013/003043
(87) Internationale Veröffentlichungsnummer: WO 2014/056613

(56) Entgegenhaltungen:
- DE-A1-102008 037 096
- DE-B3-102007 059 502

## Beschreibung

Die Erfindung betrifft ein Verfahren zum Einstellen eines Pitch-Winkels von Rotorblättern und der damit verbundenen Steigerung der Effizienz von Windenergieanlagen.

Die DE 10 2011 053 968 A1 betrifft ein System und ein Verfahren zur Inspektion von Windkraftanlagen mit einem Inspektionssystem, das ein Beobachtungssystem und eine Inspektionsvorrichtung umfasst, wobei das Beobachtungssystem eine Begutachtungsvorrichtung mit einer automatischen Absuchvorrichtung umfasst. Die Begutachtungsvorrichtung ist so konfiguriert, dass sie ein Bild mindestens eines Teils eines Rotorblattes bereitstellt, wobei die automatische Absuchvorrichtung so konfiguriert ist, dass sie sich um mindestens eine Achse dreht, um das aufgenommene Bild zu verlagern. Das Rotorblatt wird begutachtet und auf Fehleranzeichen inspiziert. Die Kontrolle kann neben einer manuellen Kontrolle und am Teleskop auch über sichtbare Bilder, Infrarotbilder, Ultraviolettbilder oder über Spektralbilder erfolgen.

Die 10 2010 046 493 B3 betrifft ein Verfahren und eine Vorrichtung zur Inspektion von Rotorblättern einer Windkraftanlage, wobei das zu prüfende Rotorblatt mittels mindestens einer Anregungsquelle angeregt wird. Der durch das Anregen entstehende Wärmefluss wird mittels zumindest eines Infrarotsensors in einer Serie von Thermobildern erfasst, damit die einzelnen Thermobilder sowie die aus der Bilderserie mittels unterschiedlicher Methoden der Signal- und Bildverarbeitung gewonnenen Ergebnisbilder verschiedener Typen untersucht werden können. Dazu ist ein Infrarotsensor fest stationiert oder zusammen mit einer Anregungsquelle auf einem fliegenden Träger befestigt.

Die DE 10 2011 086 608 A1 betrifft ein Verfahren zum Bestimmen von Betriebszuständen einer Windturbine, bei der Rotorblätter auf Basis von Sensordaten, die an Rotorblättern erfasst werden, verstellt werden. Als zu untersuchende Größe werden Motorstromdaten der Blattverstellungsmotoren verwendet, um unter anderem Risse oder Brüche der Rotorblätter zu detektieren.

Die DE 10 2011011 392 A1 betrifft eine optische Messeinrichtung für die Verformung eines Rotorblattes einer Windkraftanlage über eine Kamera, die die Verformung über Abweichungen von innerhalb des Rotorflügels angeordneten Referenzobjekten ermittelt.

Die DE 10 2007 059 165 B4 betrifft ein Verfahren und ein System zur Messung einer Auslenkung eines Hohlbauteils einer Windenergieanlage aus einer Normalposition mittels eines Messstrahls, der innerhalb des Hohlbauteils auf ein Ziel ausgerichtet wird. Aus dem Grad der Ablenkung kann der Verschleißzustand des Hohlbauteils abgeleitet werden. Die so festgestellten Abweichungen vom normalen Betriebsverhalten können zum Anlass für die Korrektur des Betriebsverhaltens genutzt werden, beispielsweise durch Anpassung des sogenannten Pitch-Winkels des Rotorblattes.

Die DE 200 21 970 U1 betrifft eine Einrichtung zur Überwachung des Zustandes von Rotorblättern an Windkraftanlagen. Hierzu werden die Rotorblätter angeregt und ein Vergleich mit einem Normalverlauf der Resonanzkurve durchgeführt.

Die DE 10 2010 048 400 A1 betrifft ein Verfahren zur Überprüfung des baulichen Zustandes von Windkraftanlagen, bei dem die Windräder mit einer Kamera erfasst werden. Die Kamera kann an einem Hubschrauber befestigt sein. Die ermittelten Daten werden gespeichert und anschließend einer Auswertung zugeführt. Als Kamera kann eine Wärmebildkamera eingesetzt werden. Aus dem aufgenommenen Wärmebild lassen sich durch geeignete Programme Stellen ermitteln, an denen die Struktur des Rotorblattes ungleichmäßig ist bzw. an denen Risse drohen oder bereits vorhanden sind.

Die DE 10 2008 037 096 A1 betrifft eine Windenergieanlage zur Umsetzung von Windenergie in eine Drehbewegung mit einem Rotor und einer Erfassungseinrichtung zur Erfassung von Betriebsparametern. Die Erfassungseinrichtung ist dazu ausgebildet, die Temperatur an wenigstens einer Stelle des Rotors zu erfassen. Die Erfassungseinrichtung kann eine Temperatursensorik zur Detektion der von der betreffenden Stelle ausgehenden Wärmestrahlung aufweisen, die Temperatursensorik kann eine Wärmebildkamera umfassen. Die Erfassungseinrichtung ist Teil einer Steuereinrichtung zur Steuerung der Windenergieanlage oder ist mit einer solchen Steuereinrichtung verbunden. Im Falle einer übermäßig hohen und/oder einer übermäßig niedrigen Temperatur kann eine Veränderung wenigstens eines Steuerparameters der Windenergieanlage bewirkt werden.

Die Infrarot-Thermographie macht sich die Tatsache zunutze, dass alle Objekte, die sich bei einer Temperatur oberhalb des absoluten Nullpunktes befinden, Strahlung im infraroten Bereich abgeben, die für die jeweilige Temperatur charakteristisch ist. Für Temperaturen zwischen 0°C und 1000°C wird dabei die maximale Intensität bei Wellenlängen zwischen 3µm und 10µm abgestrahlt. Diese Strahlung kann durch spezielle Infrarotkameras erfasst werden, so dass sich ein Bild der Oberflächentemperatur der Messobjekte ergibt. Die Rohbilder sind Grauwertbilder, in denen wärmere Bereiche heller erscheinen und kühlere Bereiche dunkler erscheinen. Der Anschaulichkeit halber wird oft eine Falschfarbendarstellung gewählt, in der wärmere Bereiche rot dargestellt werden und kühlere Bereiche blau erscheinen.

Zu der am häufigsten eingesetzten, zerstörungsfrei arbeitenden InfrarotMesstechnik wird die aktive Infrarot-Thermographie gezählt. Bei dieser Technik wird das Untersuchungsobjekt mit einem kurzen Wärmeimpuls beaufschlagt, die eindringende Wärmefront wird dabei mit einer höchstempfindlichen Infrarotkamera bei einer Temperaturauflösung < 20 mK und Bildraten von bis zu 800 Bildern pro Sekunde beobachtet, um fehlerhafte Stellen sichtbar zu machen.

Bei der passiven Thermographie wird aktiv keine Energie in das Prüfobjekt eingebracht, vielmehr nutzt diese Technik aus, dass das Objekt entweder warm aus einem Prozess kommt, beispielsweise aus dem Herstellprozess von Rotorblättern, oder sich im Laufe der Beobachtung von selbst erwärmt oder abkühlt. So wärmen sich z. B. feinste Risse durch das Reiben ihrer Flanken aneinander, wenn sie einer dynamischen Last, wie z. B. einer schnellen Rotation, ausgesetzt sind.

Weiterhin können sich Rotorblätter durch Sorineneinstrahlung erwärmen und sich aufgrund der schnellen Bewegung durch die anströmende Luft wieder abkühlen. Die passive Thermographie wird vorwiegend im Bereich der Gebäude-Thermographie zur Erkennung von Wärmebrücken oder zur Brandvermeidung in Elektroschränken verwendet. Für beide Zwecke werden relativ preiswerte und wenig empfindliche Infrarotkameras benutzt, die zur thermographischen Vermessung von im Betrieb befindlichen Rotorblättern aufgrund ihrer geringen Temperaturempfindlichkeit und schlechten Ortsauflösung nicht geeignet sind.

Aufgabe der vorliegenden Erfindung ist es, ein Verfahren zum Einstellen des Pitch-Winkels und der damit verbundenen Energieoptimierung von Rotorblättern bereitzustellen, das einfach und zuverlässig durchzuführen ist. Erfindungsgemäß wird diese Aufgabe durch ein Verfahren mit den Merkmalen des Hauptanspruches gelöst, vorteilhafte Ausgestaltungen und Weiterbildungen der Erfindung sind in den Unteransprüchen, der Beschreibung und den Figuren offenbart.

Das Verfahren zum Einstellen eines Pitch-Winkels von Rotorblättern sieht vor, dass ein Thermographiebild bei angeströmten, also sich drehenden Rotorblättern erstellt wird, ein sich ergebendes Muster in dem Thermographiebild ausgewertet wird und auf der Grundlage der Auswertung eine Verstellung des Pitch-Winkels durchgeführt wird, bis der transiente Übergang an der beabsichtigten Stelle auf der Rotorblattoberfläche liegt.

Bei der passiven Thermographie an Rotorblättern hat sich gezeigt, dass auf Rotorblättern thermographisch auswertbare Strahlungsmuster zu erkennen sind, beispielsweise wenn die Rotorblätter durch Sonneneinstrahlung erwärmt werden. Aufgrund der schnellen Bewegung durch die anströmende Luft kühlen die Rotorblätter an den Stellen ab, an denen die laminare Strömung in eine verwirbelte Strömung umschlägt (Vortex). Somit erfolgt diese Abkühlung des Rotorblattmaterials nicht gleichmäßig. Vielmehr ist die Abkühlung des Rotorblattes deutlich geringer, wenn sich der beobachtete Rotorblattabschnitt in einer laminaren Luftströmung anstatt in einer turbulenten Luftströmung befindet. So hat sich gezeigt, dass die Hinterkanten der Rotorblätter immer kühler als die Vorderkanten sind, denn dort kommt es aus strömungstechnischen Gründen immer zu einer Auskühlung an der notwendigen turbulenten Grenzschicht im Bereich der Abrisskante der Luftströmung. Bei üblichen Rotorblättern und Pitchwinkeleinstellungen befindet sich dieser Übergangsbereich von laminarer zu turbulenter Strömung (Transienter Übergang) im hinteren Drittel des Rotorblattbereichs. An der Vorder- oder Anströmkante der Rotorblätter ist es gewünscht, eine möglichst laminare Strömung ohne Vortexstrukturen anliegen zu haben, um durch eine gleichmäßige Anströmung die Leistung der Windkraftanlage zu erhöhen. Zeigt nun ein Thermographiebild ausgesprochene Ungleichmäßigkeiten der Temperaturverteilung an den Rotorblättern, kann dies entweder auf Schädigungen der Oberflächenstruktur oder aber auf einen falsch eingestellten Pitch-Winkel hindeuten. Erfindungsgemäß ist daher vorgesehen, dass bei einem ungleichmäßigen Wärmebild und bei Erkennen charakteristischer Wärmebildstrukturen oder Wärmebildmustern eine Reparatur der Oberflächen bei typischen dreieckigen Vortexstrukturen oder eine Verstellung des Pitch-Winkels bei unpassender Lage des Transienten Übergangs durchgeführt wird, mit dem Ziel, eine möglichst optimale Wärmeverteilung über die Länge und Oberfläche des Rotorblattes während des Betriebes zu erreichen. Hiermit wird eine optimale Energieeffizienz der Windkraftanlagen erreicht.

Es ist somit vorgesehen, dass der Pitch-Winkel dergestalt verstellt wird, dass der Übergang von laminarer Strömung zu turbulenter Strömung (Transienter Übergang) an der beabsichtigten Stelle auf der Rotorblattoberfläche liegt. Der optimale Pitchwinkel ist von der Art der Rotorblätter und des Generators bzw. dem optimalen Zusammenspiel aller Komponenten abhängig. Allen Windkraftanlagen ist aber gemeinsam, dass alle Rotorblätter einer Anlage den gleichen Pitchwinkel besitzen müssen.

Zur Vergrößerung der Präzision des Thermographiebildes wird zu dessen Erstellung die thermische Strahlung vorteilhafterweise in zwei unterschiedlichen Wellenlängenbereichen erfasst. Dabei ist es möglich und vorgesehen, eine Dualband-Infrarotkamera zu benutzen. Es ist vorgesehen, die Messungen in zwei unterschiedlichen Wellenlängenbereichen gleichzeitig durchzuführen, um die thermische Strahlung der Rotorblätter zu erfassen, wobei die thermische Strahlung einmal im mittelwelligen Infrarotbereich zwischen 3µm und 5µm und einmal im langwelligen infrarotbereich mit einem Wellenlängenbereich von 8µm bis 14µm liegt. Durch eine pixelgenaue Überlagerung der beiden Thermogramme in den jeweiligen Wellenlängenbereichen ergeben sich vorteilhafte Möglichkeiten zur Identifizierung von thermischen Differenzen sowohl in der Oberflächenschicht des Rotorblattes als auch an der Grenzfläche zwischen der Oberflächenschicht und einem Grundkörper. Durch Messungen in den beiden Wellenlängenbereichen kann unabhängig von Emissionskoeffizienten die absolute Temperatur des jeweiligen Rotorblattes gemessen werden, ebenso ist es möglich, den Einfluss wechselnder Sonneneinstrahlungen auszublenden.

Eine Weiterbildung der Erfindung sieht vor, dass zumindest ein Interferenzfilter zur Erstellung des Thermögraphiebildes eingesetzt wird. Durch die Interferenzfilter, vorteilhafterweise sehr schmalbandige Interferenzfilter, lassen sich mit der Infrarot-Dualband-Kamera auch spektroskopische Aufnahmen erzielen, die es ermöglichen, z.B. Verschmutzungen auf der Oberfläche der Rotorblätter zu identifizieren, wodurch Fehlinterpretationen vermieden werden.

Die Thermographiebilder der Rotorblätter werden während des Betriebes einer Windenergieanlage erstellt, so dass es möglich ist, den Pitch-Winkel des Rotorblattes während des Betriebes zu kontrollieren, bei für die Leistungswerte der Windenergieanlage negativen Thermographiemustern die Rotorblätter zu verstellen und anschließend zu kontrollieren, ob und inwieweit sich eine Verbesserung eingestellt hat und eine Leistungsoptimierung durchgeführt wurde. Der Pitch-Winkel der Rotorblätter lässt sich somit über die Thermographiebilder optisch darstellen und kann im Betrieb auf Grundlage dieser Thermographieuntersuchungen korrigiert werden.

Der Pitch-Winkel kann solange verstellt werden, bis über die Längserstreckung des Rotorblattes eine optimale, insbesondere gleichmäßige Temperaturverteilung vorhanden ist, alternativ oder ergänzend ist vorgesehen, dass die Pitch-Winkel-Verstellung aller Rotorblätter einer Windkraftanlage miteinander verglichen und die Pitchwinkel aufeinander abgestimmt werden können, um mögliche Getriebeschäden aufgrund ungleich eingestellter Pitchwinkel zu vermeiden.

Besonders vorteilhafterweise wird das Thermografiebild verwendet, um eine Oberflächenqualität der Rotorblattoberfläche zu ermittein. Die im Thermographiebild erkennbaren Energieverluste werden beispielsweise durch Verschmutzungen oder Defekte auf der Oberfläche des Rotorblattes hervorgerufen. Aber auch ungenügende Oberflächenqualitäten können ausschlaggebend sein. Durch gegebenenfalls geeignete Weiterverarbeitung und Bildbearbeitung der Thermographiebilder können diese Energieverluste beurteilt werden, so dass Fehler, Defekte und/oder Verschmutzungen auf der Rotorblattoberfläche festgestellt und entsprechende Gegenmaßnahmen eingeleitet werden können.

In einer bevorzugten Ausgestaltung des Verfahrens wird das Thermographiebild verwendet, um einen Zustand am Rotorblatt vorhandener Elemente zu beurteilen, die der Strömungsoptimierung dienen. Wie bereits dargelegt, werden an Rotorblättern heute eine Vielzahl unterschiedlicher strömungsoptimierender Maßnahmen durchgeführt, die beispielsweise in Form von Stall Strips, Vortex Generatoren, Zackenbändern oder Dino Tails ausgebildet sein können. Da diese die am Rotorblatt herrschende Strömung verändern, können auch die von diesen Elementen hervorgerufenen Effekte im Thermografiebild erkannt und identifiziert werden. Treten nun beispielsweise durch Defekte oder Beschädigungen Fehler an diesen Elementen auf, führt dies zu charakteristischen Änderungen im Thermographiebild, so dass diese Informationen auch verwendet werden können, um den Zustand dieser Elemente zu beurteilen und gegebenenfalls entsprechend Gegenmaßnahmen, wie beispielsweise Reparaturen oder Reinigungen, durchführen zu können.

Nachfolgend wird das Verfahren anhand der Figuren näher erläutert. Es zeigen:
- Figuren 1 bis 3: Thermogramme eines Rotorblattausschnittes mit unterschiedlichen Pitch-Winkeln;
- Figur 4: ein Thermogramm eines Rotorblattes.

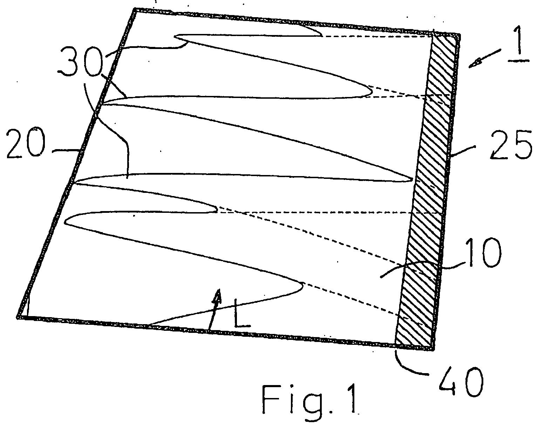

In der Figur 1 ist ein Rotorblatt 1 in einem Ausschnitt gezeigt dessen Pitch-Winkel 5° beträgt, die Anströmkante oder Vorderkante 20 des Rotorblattes 1 ist am linken Rand, die Hinter- oder Abrisskante 25 oder das rückwärtige Ende ist am rechten Rand der Abbildung gezeigt, die Oberfläche 10 des Rotorblattes 1 ist tragflächenartig gewölbt, in der Figur 1 ist die Oberseite des Rotorblattes 1 dargestellt. Über die Längserstreckung L des Rotorblattes 1 sind in der Figur 1 dreieckige Strukturen, sogenannte Vortex Strukturen 30 zu erkennen, die in Thermogrammen unterschiedliche Helligkeiten aufweisen. Die unterschiedlichen Helligkeiten rühren von unterschiedlichen Temperaturen an der Oberfläche 10 des Rotorblattes 1 her. Die lokalen Temperaturunterschiede auf der Oberfläche 10 des Rotorblattes 1 ergeben sich entweder durch eine ungleichmäßige Dissipation aufgrund von suboptimalen Umströmungssituationen oder durch Fehistellungen und Fehler innerhalb der Oberflächenstruktur der Rotorblätter 1. In der Figur 1, in der ein Pitch-Winkel von 5° eingestellt ist, sind ausgeprägte Temperaturunterschiede zu erkennen, die auf unerwünschte Luftverwirbelungen oder sogenannte Vortex-Bildungen zurückzuführen sind. Großflächige Verwirbelungen sind vom transienten Übergang 40 bis an die Hinterkante 25 oder zur Hinterkante 25 hin als kältere oder dunklere Bereiche zu erkennen, die sich nur über das hintere Drittel des Rotorblattes 1 erstrecken. An der Vorderkante 20 sind die dunkleren, kühleren dreieckigen, spitz zulaufenden Bereiche des Rotorblattes 1 zu erkennen, wobei sich diese Bereiche 30 bis nahe an die Vorderkante 20 erstrecken, also relativ weit vorn eine turbulente Anströmsituation vorhanden ist, die zu einer ungleichmäßigen Energiedissipation führt.

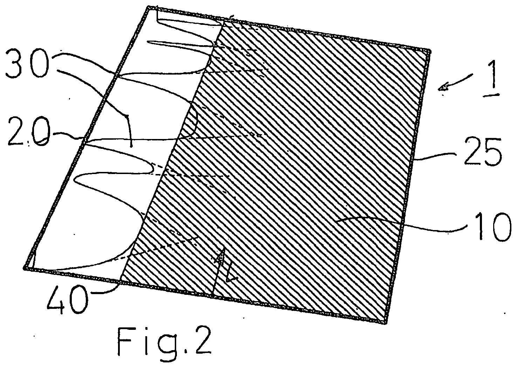

In der Figur 2 ist der Pitch-Winkel von 10° eingestellt, das Thermographiebild in Figur 2 zeigt eine wesentlich gleichmäßigere Temperaturverteilung über die Breite des Rotorblattes 1, die kälteren, dunkleren Bereiche treten in einem relativ breiten Bereich von dem transienten Übergang 40 bis an die Hinterkante 25 oder Abströmkante des Rotorblattes 1 auf, während die gesamte Temperaturverteilung über die Längserstreckung L im Wesentlichen gleichmäßig ist, insbesondere im Bereich der Hinterkante 25. Jedoch tauchen bei größeren Pitch-winkeln mehr dunkle, also kühlere dreieckige Strukturen auf, die die Verwirbelungen an den Oberflächenfehlern zeigen.

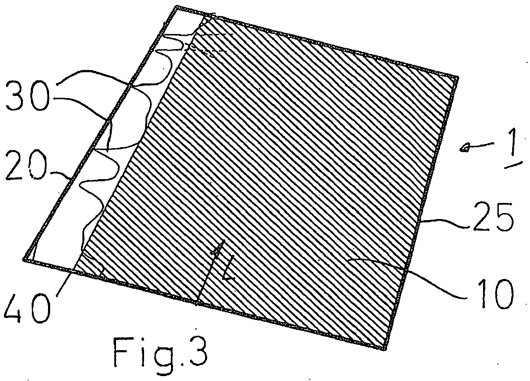

In der Figur 3 wurde ein Einstellwinkel von 15° gewählt, der dunkle, gleichmäßige Temperaturbereich an der Oberfläche 10 erstreckt sich über fast die gesamte Breite der Oberseite des Rotorblattes 10, lediglich im Bereich der Anströmkante 20 sind bei diesem Einstellwinkel noch wärmere Bereiche vorhanden, eine Vortex-Bildung 30, also die ausgeprägten dreieckigen Strukturen, wie sie in der Figur 1 aufgeführt sind, sind kaum mehr zu erkennen. Dies bedeutet, dass eine weitgehend turbulente Strömung an der Oberfläche 10 des Rotorblattes 1 sowohl über die gesamte Längserstreckung L als auch über die Breite von der Hinterkante 20 bis weit über die Mitte senkrecht zur Längserstreckung L vorhanden ist.

In den Figuren 1 bis 3 wurde das Thermogramm auf der Druckseite angefertigt, die Vortex-Strukturen bei einem suboptimalen Pitch-Winkel bilden sich jedoch auch auf der Saugseite der Rotorblätter 1, so dass eine thermographische Untersuchung auf beiden Seiten der Rotorblätter 1 durchgeführt werden kann. Dass sich der Transiente Übergang 40 von laminarer Vorderkanten- zu verwirbelter Hinterkantenströmung mit zunehmenden Pitschwinkel zur Vorderkante verschiebt ist gut in den Abbildungen 1 - 3 zu erkennen.

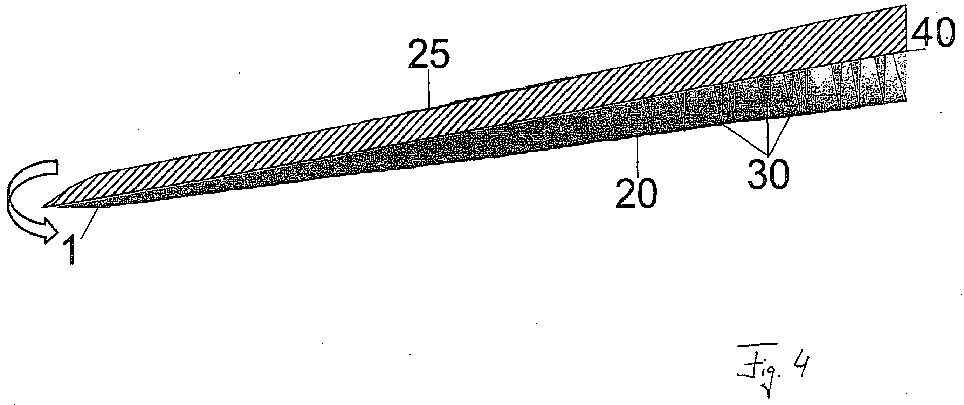

Die Figur 4 zeigt ein Thermogramm eines sich drehenden Rotorblattes mit Blick auf die Saugseite, bei der die dunkleren, kälteren Strukturen an der Hinterkante 20 des Rotorblattes 1 auftauchen und sich bis an die Hinterkante 25 des Rotorblattes 1 erstrecken. Durch die reduzierte laminare Strömung, die aufgrund der turbulenten Anströmung auch an der Saugseite zu höheren Wärmeverlusten führt, arbeiten die Windenergieanlagen nicht im optimalen Bereich, was zu signifikanten Leistungsverlusten führt.

Mit dem erfindungsgemäßen Verfahren ist es möglich, durch Thermographieaufnahmen vor Ort an in Betrieb befindlichen Windenergieanlagen Messungen durchzuführen, um die Umströmungssituation der Rotorblätter im Betrieb sichtbar zu machen und eine verbesserte Einstellung der Rotorblätter im Hinblick auf den Pitch-Winkel zu ermöglichen. Darüber hinaus ist es mit dem Verfahren möglich, berührungslos im laufenden Betrieb Verschleiß oder Defekte an den Rotorblättern zu detektieren.

Eine Abkühlung an der Vorderkante der Rotorblätter weist immer auf eine ungünstige Strömungssituation und damit eine hohe Verlustleistung hin, was aus technischen und wirtschaftlichen Gründen vermieden werden sollte, da bei nicht laminaren Anströmungen auch hohe mechanische Belastungen auf die Rotorblätter ausgeübt werden.

Zur Verbesserung des Einstellverfahrens ist es möglich, an Flügelmodellen im Windkanal thermographische Vermessungen durchzuführen und gleichzeitig optische Strömungsmessverfahren anzuwenden, um Anströmbedingungen aufzufinden, die zu signifikanten Temperaturmustern führen und eine Korrelation zwischen den jeweiligen Pitch-Winkeln der Flügelmodelle und den Temperaturmustern zeigen. Die Zuordnung von Temperaturmustern oder VortexStrukturen zu verschiedenen Pitch-Winkeln ermöglicht eine gerichtete Verstellung der Rotorblätter dergestalt, dass anhand der Muster der Thermographiebilder festgelegt werden kann, in welche Richtung der Pitch-Winkel verstellt werden muss, also vergrößert oder verringert werden muss. Die kombinierte Vermessung der Strömungsfelder mit den an den Rotorblättern erzeugten Temperatursignaturen in Verbindung mit Ergebnissen aus Modellrechnungen ermöglichen eine Beurteilung der Auswirkungen auf die Leistungskennlinien von Windenergieanlagen. Werden durch die thermographische Untersuchung Unebenheiten, Risse oder Trockenlaminate detektierte, können durch diese Informationen frühzeitige Wartungs- und Reparaturmaßnahmen aufgrund der ermittelten thermographischen Muster im Betrieb veranlasst werden, um auch bei vorhandenen Rissen eine optimale Leistungsausbeute aus der Windenergieanlage zu erreichen, ohne die Rotorblätter mechanisch zu überlasten.

Auch Strukturen, die mit der Absicht auf das Rotorblatt aufgebracht wurden, um die Strömung aerodynamisch zu verändern wie z.B. Stall Strips, Vortex Generatoren, Zackenbänder oder Dino Tails, können auf ihre Wirksamkeit bzw. auf ihre Funktionalität überprüft werden. Insbesondere die ggf. teilweise Zerstörung bzw. das Fehlen dieser Bauteile kann mit der oben beschrieben Methode einfach erkannt werden.

Das vorgeschlagene Verfahren lässt sich auch an unzugänglichen Standorten von Windenergieanlagen durchführen, beispielsweise im Offshore-Bereich, wo die Ermittlung der thermographischen Bilder über Schiffe, von Helikoptern, Bal-Ionen oder von in der Nähe stationierten Windenergieanlagen automatisiert durchgeführt werden kann. Dadurch werden kostenintensive Inspektionen mit sich abseilenden Personen zumindest teilweise vermieden.

## Patentansprüche

1. Verfahren zum Einstellen eines Pitch-Winkels von Rotorblättern (1), bei dem
- ein Thermographiebild bei angeströmten Rotorblättern (1) erstellt wird
- ein sich ergebendes Muster in dem Thermographiebild ausgewertet wird
- auf der Grundlage der Auswertung eine Verstellung des Pitch-Winkels durchgeführt wird, bis der Übergang von laminarer Strömung zu turbulenter Strömung an der beabsichtigten Stelle auf der Rotorblattoberfläche liegt.

2. Verfahren nach Anspruch 1, **dadurch gekennzeichnet, dass** der Pitch-Winkel dergestalt verstellt wird, dass eine gleichmäßige Temperaturverteilung über der Rotorblattoberfläche (10) vorliegt.

3. Verfahren nach Anspruch 1 oder 2, **dadurch gekennzeichnet, dass** zur Erstellung des Thermographiebildes die thermische Strahlung in zwei unterschiedlichen Wellenlängenbereichen erfasst wird.

4. Verfahren nach Anspruch 3, **dadurch gekennzeichnet, dass** die Erfassung der thermischen Strahlung in einem Wellenlängenbereich zwischen 3 µm und 5 µm und zwischen 8 µm und 14 µm erfolgt.

5. Verfahren nach einem der Ansprüche 3 oder 4, **dadurch gekennzeichnet, dass** die Bilder der unterschiedlichen Wellenlängenbereiche einander überlagert werden, um das Thermographiebild zu erstellen.

6. Verfahren nach einem der voranstehenden Ansprüche, **dadurch gekennzeichnet, dass** zumindest ein Interferenzfilter zur Erstellung des Thermographiebildes eingesetzt wird.

7. Verfahren nach einem der voranstehenden Ansprüche, **dadurch gekennzeichnet, dass** Thermographiebilder der Rotorblätter (1) während des Betriebes einer Windenergieanlage erstellt werden.

8. Verfahren nach einem der voranstehenden Ansprüche, **dadurch gekennzeichnet, dass** der Pitch-Winkel solange verstellt wird, bis an der Vorderkante und an der Oberfläche (10) über die Längserstreckung (L) des Rotorblattes (1) eine gleichmäßige Temperaturverteilung vorhanden ist.

9. Verfahren nach einem der voranstehenden Ansprüche, **dadurch gekennzeichnet, dass** das Thermographiebild verwendet wird, um eine Oberflächenqualität der Rotorblattoberfläche (10) zu ermitteln.

10. Verfahren nach einem der voranstehenden Ansprüche, **dadurch gekennzeichnet, dass** das Thermographiebild verwendet wird, um einen Zustand am Rotorblatt (1) vorhandener Elemente zu beurteilen, die der Strömungsoptimierung dienen.

## Claims

1. Method for setting a pitch angle of rotor blades (1), in which
- a thermographic image is created for rotor blades (1) exposed to a flow
- a resultant pattern in the thermographic image is evaluated
- on the basis of the evaluation, an adjustment of the pitch angle is carried out until the transition from laminar flow to turbulent flow lies at the intended location on the rotor blade surface.

2. Method according to Claim 1, **characterized in that** the pitch angle is adjusted in such a way that there is a uniform temperature distribution over the rotor blade surface (10).

3. Method according to Claim 1 or 2, **characterized in that**, for creating the thermographic image, the thermal radiation is recorded in two different wavelength ranges.

4. Method according to Claim 3, **characterized in that** the recording of the thermal radiation takes place in a wavelength range of between 3 µm and 5 µm and between 8 µm and 14 µm.

5. Method according to either of Claims 3 and 4, **characterized in that** the images of the different wavelength ranges are superimposed one another in order to create the thermographic image.

6. Method according to one of the preceding claims, **characterized in that** at least one interference filter is used for creating the thermographic image.

7. Method according to one of the preceding claims, **characterized in that** thermographic images of the rotor blades (1) are created during the operation of a wind turbine.

8. Method according to one of the preceding claims, **characterized in that** the pitch angle is adjusted until there is a uniform temperature distribution over the longitudinal extent (L) of the rotor blade (1) at the leading edge and on the surface (10).

9. Method according to one of the preceding claims, **characterized in that** the thermographic image is used to ascertain a surface quality of the rotor blade surface (10).

10. Method according to one of the preceding claims, **characterized in that** the thermographic image is used to assess a state of elements that are on the rotor blade (1) and serve for optimizing the flow.

## Revendications

1. Procédé pour régler un angle de calage de pales de rotor (1), dans lequel
- on établit une image thermographique lorsque les pales de rotor (1) sont attaquées par un flux,
- on évalue un motif résultant dans l'image thermographique
- en se basant sur l'évaluation, on exécute une modification de l'angle de calage jusqu'à ce que la transition de l'écoulement laminaire à l'écoulement turbulent se trouve à l'emplacement voulu sur la surface des pales de rotor.

2. Procédé selon la revendication 1, **caractérisé en ce que** l'angle de calage est modifié de telle façon qu'il se présente une répartition de température régulière sur la surface des pales de rotor (10).

3. Procédé selon la revendication 1 ou 2, **caractérisé en ce que** pour établir l'image thermographique, on détecte le rayonnement thermique dans deux plages de longueurs d'onde différentes.

4. Procédé selon la revendication 3, **caractérisé en ce que** la détection du rayonnement thermique a lieu dans une plage de longueurs d'onde entre 3 µm et 5 µm et entre 8 µm et 14 µm.

5. Procédé selon l'une des revendications 3 ou 4, **caractérisé en ce que** les images des plages de longueurs d'onde différentes sont superposées l'une à l'autre afin d'établir l'image thermographique.

6. Procédé selon l'une des revendications précédentes, **caractérisé en ce que** l'on emploie au moins un filtre à interférence pour établir l'image thermographique.

7. Procédé selon l'une des revendications précédentes, **caractérisé en ce que** l'on établit des images thermographiques des pales de rotor (1) pendant le fonctionnement d'une installation d'énergie éolienne.

8. Procédé selon l'une des revendications précédentes, **caractérisé en ce que** l'on modifie l'angle de calage aussi longtemps qu'il se présente au niveau de l'arête antérieure et au niveau de la surface (10) une répartition de température régulière sur l'extension longitudinale (L) de la pale de rotor (1).

9. Procédé selon l'une des revendications précédentes, **caractérisé en ce que** l'on utilise l'image thermographique pour déterminer une qualité de surface de la surface des pales de rotor (10).

10. Procédé selon l'une des revendications précédentes, **caractérisé en ce que** l'on utilise l'image thermographique pour juger quant à un état d'éléments présents sur la pale de rotor (1) qui servent à optimiser l'écoulement.
